# EUROPÄISCHE PATENTANMELDUNG

(11) **EP 0 677 402 A1**
(43) Veröffentlichungstag der Anmeldung: **18.10.1995**
(21) Anmeldenummer: 95104353.8
(22) Anmeldetag: 24.03.1995
(51) Int. Cl.: B44D 3/16, B08B 7/00, B23K 26/00

(54) **Vorrichtung zum Entfernen einer Schicht aus Lack oder Kunststoff mittels eines Laserstrahls**

(30) Priorität: 15.04.1994 DE 4413159
(71) Anmelder: Jet Laser Systeme Gesellschaft für Oberflächentechnik mbH, D-41836 Hückelhoven (DE)
(72) Erfinder: Klupp, Alexander, Dipl.-Ing., D-41812 Erkelenz (DE); Kalkert, Peter Dr., D-52428 Jülich-Pattern (DE); Jetter, Heinz Leonhard Dr., D-52428 Jülich (DE); Schultz, Arnulf Dr., D-52382 Niederzier (DE)
(74) Vertreter: Bauer, Hubert, Dipl.-Ing.

(57) **Zusammenfassung**

Bei einem Bearbeitungskopf zur Verwendung beim berührungslosen Entfernen einer Schicht aus Lack oder Kunststoff, beispielsweise Polytetrafluoräthylen von einem Bauteil sowie zum Reinigen und Dekontaminieren einer mit Lack oder Kunststoff beschichteten Oberfläche mittels eines gepulsten Laserstrahls unter Verwendung eines TEA-CO₂-Lasers als Laserstrahlquelle, wobei der Laserstrahl über spiegelnde und fokussierende optische Einrichtungen geführt wird, ist vorgesehen, daß im Bearbeitungskopf (1) ein Schwenkspiegel (9) zum Spiegeln des Laserstrahls (6) angeordnet ist, der um zwei senkrecht zueinander angeordnete Schwenkachsen zu schwenken ist, daß zwischen dem Bearbeitungskopf (1) und der zu bearbeitenden Oberfläche (4) ein Tubus (2) mit einer Dichtung (3) am unteren Ende des Tubus (2) vorgesehen ist, daß der Bearbeitungskopf (1) zusammen mit dem Tubus (2) und der Dichtung (3) über die zu bearbeitende Oberfläche (4) zu führen ist und daß eine Absauganlage (22) mit einem Partikelfilter und einem Aktivkohlefilter vorgesehen ist.

## Beschreibung

Die Erfindung betrifft einen Bearbeitungskopf zur Verwendung beim berührungslosen Entfernen einer Schicht aus Lack oder Kunststoff, beispielsweise Polytetrafluoräthylen von einem Bauteil sowie zum Reinigen und Dekontaminieren einer mit Lack oder Kunststoff beschichteten Oberfläche mittels eines gepulsten Laserstrahls unter Verwendung eines TEA-CO₂-Lasers als Laserstrahlquelle, wobei der Laserstrahl über spiegelnde und fokussierende optische Einrichtungen geführt wird.

Die Abkürzung TEA steht für transversely excited atmospheric pressure.

Die zur Zeit benutzten Lacksysteme zeichnen sich durch hohe Leistungsfähigkeit und wirkungsvoller Schutzvermögen aus, das auf extremer Haftfähigkeit und Medienresistenz basiert. Derartige Eigenschaften führen jedoch immer häufiger zu Problemen beim Entlacken von mit Lack oder Kunststoff, beispielsweise Polytetrafluoräthylen, beschichteten Bauteilen. In bestimmten Zeitintervallen ist eine Entlackung Von Bauteilen, beispielsweise im Flugzeugbau mit dem Ziel, das Flugzeug beispielsweise auf Haarrisse und dergleichen genau untersuchen zu können, erforderlich. Hinzu kommt, daß auch widerstandsfähige Beschichtungen einem Verschleiß unterworfen sind. Dadurch ist es notwendig, die Beschichtung in Intervallen zu erneuern, nachdem vorher zunächst die bisherige Beschichtung einschließlich eines darunter befindlichen Haftvermittlers entfernt und die freigelegte Oberfläche des Bauteiles für die Aufbringung einer neuen Beschichtung vorbereitet worden ist.

Beim schlagartigen Verdampfen von Lack durch einen gepulsten Laser entstehen im wesentlichen Gase und Stäube, die abgesaugt und gefiltert werden müssen. Das Laserverfahren ist insbesondere eine umweltfreundliche Alternative zu den gängigen Verfahren und eröffnet hier die Möglichkeit, die Umweltbelastung entscheidend zu verringern.

Der Erfindung liegt die Aufgabe zugrunde, einen Bearbeitungskopf der einleitend genannten Art zu schaffen, mit dem eine zu entlackende Oberfläche gründlich entlackt werden kann und mit der gleichzeitig die beim Entlacken angefallenen Stäube und Gase aus dem Bearbeitungskopf abgezogen und einer Filterung bzw. Reinigung unterworfen werden können.

Diese Aufgabe wird erfindungsgemäß dadurch gelöst, daß im Bearbeitungskopf ein Schwenkspiegel zum Spiegeln des Laserstrahls angeordnet ist, daß zwischen dem Bearbeitungskopf und der zu bearbeitenden Oberfläche ein Tubus mit einer Dichtung am unteren Ende des Tubus vorgesehen ist, daß der Bearbeitungskopf zusammen mit dem Tubus und der Dichtung über die zu bearbeitende Oberfläche zu führen ist und daß eine Absauganlage mit einem Partikelfilter vorgesehen ist.

Auf diese Weise gelangt man zu einem Bearbeitungskopf der einleitend genannten Art, mit dem eine zu behandelnde Oberfläche gut entlackt werden kann, ohne daß es zu Auslassungen und Doppelbestrahlungen kommt, und mit der darüberhinaus die beim Entlacken anfallenden Gase und Stäube einer Reinigung bzw. einer Filterung unterworfen werden können.

Die gefilterte Luft wird nicht an die Umgebung abgegeben sondern weitgehend in den Arbeitskopf zurückgeführt. Lediglich ein Anteil, der vom Gesamtsystem als "Falschluft" über Öffnungen und Undichtigkeiten angesaugt werden, muß abgeblasen werden. Diese Luft ist aber im Mittel mehrfach, entsprechend dem Mengenverhältnis von Gesamtluftstrom zu Falschluftstrom, durch das Filter gelaufen.

In weiterer Ausgestaltung der Erfindung kann die Vorrichtung so ausgebildet sein, daß innerhalb des Tubus ein beweglich angeordneter Trichter vorgesehen ist, der innerhalb des Tubus synchron mit dem durch den Schwenkspiegel geführten Laserstrahl bewegbar ist. Hierdurch wird eine sehr effektive Absaugung der Stäube und Gase ermöglicht, weil diese an der Stelle des Entstehens auf einer vergleichsweise kleinen Fläche abgesaugt weren.

Zwischen dem oberen Teil des schwenkbaren Trichters und der Innenwandung des Bearbeitungskopfes ist zweckmäßig eine Dichtung vorgesehen.

Außerdem empfiehlt es sich, die Vorrichtung so zu gestalten, daß die gesamte Vorrichtung von einer Fahrzeugeinheit mit einem als Roboter dienenden frei beweglichen Rohrgestänge aufgenommen wird.

Hierbei empfiehlt es sich, die Anordnung so zu treffen, daß eine Fahrzeugeinheit mit ortsfest am Fahrgestell positioniertem Lasergerät und einem Roboter mit einem frei beweglichen Rohrgestänge vorgesehen ist, bis zu dessen einem Ende ein vom Lasergerät erzeugter Laserstrahl als Freistrahl geleitet wird, der sodann durch das Gestänge geführt wird und an dessen freiem anderen Ende austritt.

Die zum Beispiel für die Entlackung von Flugzeugen erforderliche Energiedichte führt bei den zur Zeit verfügbaren Lasern zu Fleckgrößen von etwa 1 cm². Da diese Laser mit einigen hundert Herz schießen benötigt man eine Vorrichtung, die aufeinanderfolgende Laserflecke genügend schnell und präzise nebeneinandersetzt.

Andererseits muß diese Vorrichtung einfach und ohne großen Aufwand über das Werkstück, beispielsweise über das Flugzeug geführt werden können. Diese Vorrichtung befindet sich in einem Bearbeitungskopf, der außerdem die Fokussierungsoptik und eine Absaugeinrichtung zum gezielten Wegführen der beim Entlacken entstehenden Gase und Stäube enthält.

Bei bekannten Ausführungen wird ein Arbeitskopf jeweils auf dem Werkstück abgesetzt und ruht während der Bearbeitung. Anschließend wird er abgehoben, der Laser stoppt und der Kopf muß sehr genau relativ zur letzten Arbeitsfläche wieder abgesetzt werden.

Dies verursacht laufend Betriebsunterbrechungen, die die Bearbeitungsdauer in die Länge ziehen, darüber hinaus wird an die Positioniergenauigkeit der Handhabungseinrichtung, die den Kopf führt, eine sehr hohe Anforderung gestellt, die mit heute verfügbaren Systemen an Großflugzeugen kaum zu realisieren ist.

Die Führung des erzeugten Laserflecks über das Werkstück erfolgt in der erfindungsgemäßen Anordnung durch einen im Bearbeitungskopf angebrachten Schwenkspiegel, der in zwei zueinander senkrechten Ebenen gekippt werden kann.

Während der Bearbeitungsphase wird der Kopf kontinuierlich verschoben, während der Schwenkspiegel den Fleck senkrecht zum Vorschub ablenkt. Da solch ein Spiegel eine kleine Masse hat, kann auch bei schnell schießenden Lasern eine genügend hohe Ablenkgeschwindigkeit erreicht werden. Die Präzision wird dadurch erreicht, daß der Ablenkwinkel laufend gemessen wird und der Laser erst dann ausgelöst wird, wenn der Spiegel in der richtigen Position ist. Da der Laser auf einige Mikrosekunden genau ausgelöst bzw. getriggert werden kann, kann der Fleck mit einer relativen Genauigkeit von einigen Mikrometern plaziert werden. Durch den Einsatz eines Bilderkennungssystems kann die Position bereits bearbeiteter Stellen erkannt und die präzise Position weiterer, zu bearbeitender Stellen ermittelt werden.

Zusätzlich läßt sich der Schwenkspiegel in Vorschubrichtung verkippen. Dadurch lassen sich Ungleichmäßigkeiten im Vorschub des Arbeitskopfes ausgleichen. Da die Masse des Schwenkspiegels sehr viel geringer ist als die des gesamten Arbeitskopfes, kann der Spiegel viel schneller reagieren und in einem Regelsystem den effektiven Vorschub konstant halten.

Darüber hinaus dient die zweite Kippebene dazu, mit den Laserflecken ein meanderförmiges Überdeckungsmuster zu erzeugen, obwohl der Arbeitskopf kontinuierlich vorgeschoben wird.

Die Erfindung wird nachfolgend anhand eines in der Zeichnung dargestellten Ausführungsbeispieles des näheren erläutert. Es zeigt
- Fig. 1: einen schematischen Schnitt durch einen Bearbeitungskopf mit Absaugfilter,
- Fig. 2: eine Alternative zu Figur 1 und

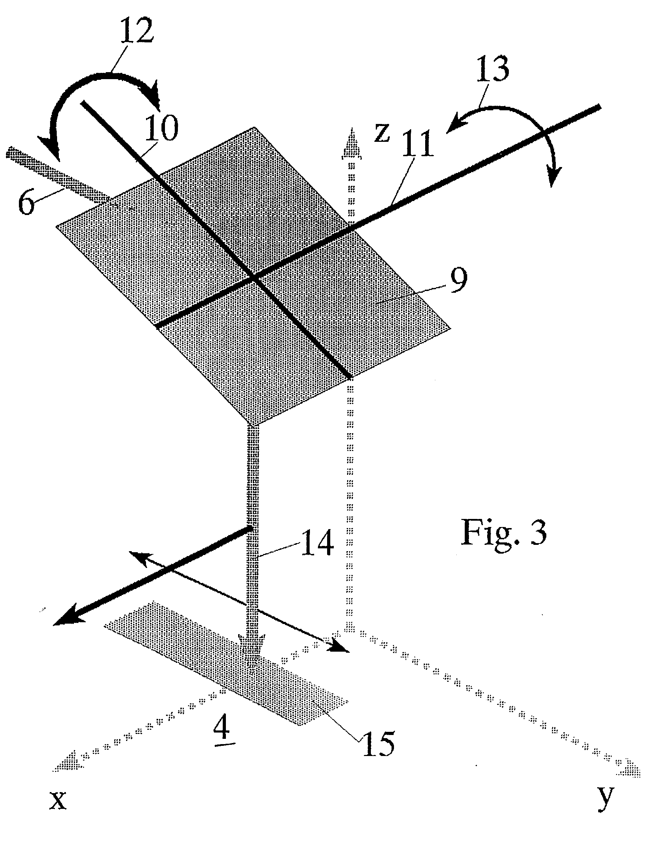

- Fig. 3: einen um zwei aufeinander senkrecht stehende Schwenkachsen schwenkbarer Schwenkspiegel.

Der Bearbeitungskopf 1 ist auf einem Tubus 2 angeordnet, der unter Zwischenlage einer Dichtung 3 auf der zu bearbeitenden Oberfläche 4 verfahrbar ist. Innerhalb des Tubus 2 ist ein weiterer Tubus 5 vorgesehen, innerhalb dessen der Laserstrahl 6 zwischen den beiden äußeren Strahlen 7,8 geführt ist.

Im Bearbeitungskopf 1 ist ein Schwenkspiegel 9 vorgesehen, der bezogen auf ein x,y,z-System um eine Schwenkachse 10 und um eine dazu senkrecht verlaufende Schwenkachse 11 in Richtung der Doppelpfeile 12 bzw. 13 geschwenkt werden kann, so daß der einfallende Laserstrahl 6 nach der Reflexion als reflektierter Strahl 14 auf die zu bearbeitende Oberfläche 4 gelenkt wird und hier einen Fleck 15 bildet.

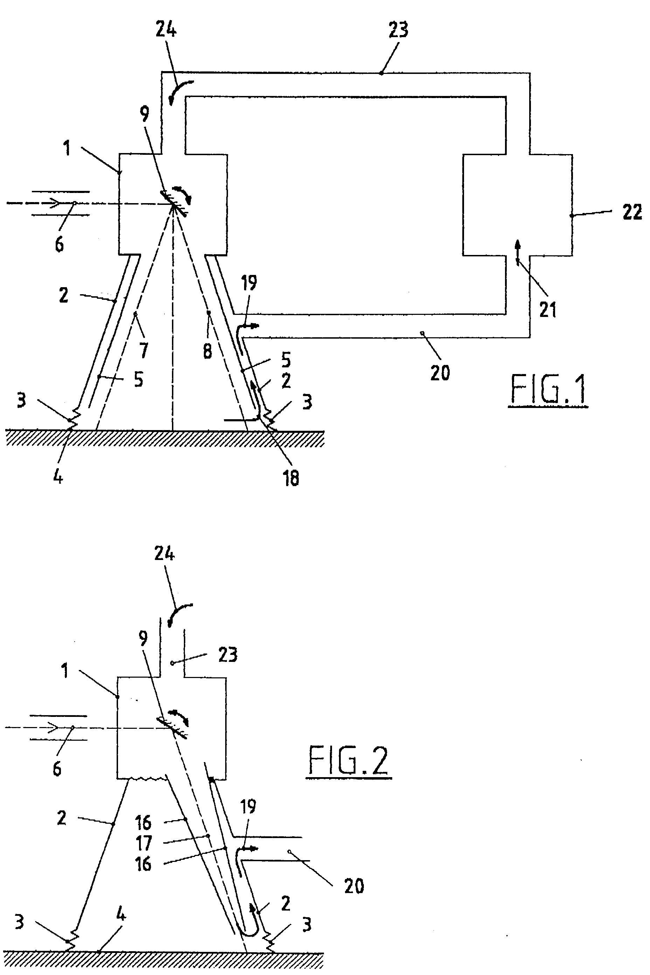

Die in Figur 2 dargestellte Ausführung unterscheidet sich von derjenigen nach Figur 1 dadurch, daß innerhalb des Tubus 2 ein Trichter 16 vorgesehen ist, der um die Mittelachse 17 des reflektierten Laserstrahls angeordnet ist und die gleichen Bewegungen ausführt wie der Laserstrahl.

Der innerhalb des Tubus 2 anfallende Staub wird in Richtung der Pfeile 18 und 19 durch ein Rohr 20 und in Richtung des Pfeiles 21 durch die Absaug- und Filtervorrichtung 22 sowie durch ein Rohr 23 in Richtung des Pfeiles 24 wieder zurück in den Bearbeitungskopf 1 geführt.

## Patentansprüche

1. Bearbeitungskopf zur Verwendung beim berührungslosen Entfernen einer Schicht aus Lack oder Kunststoff beispielsweise Polytetrafluoräthylen von einem Bauteil sowie zum Reinigen und Dekontaminieren einer mit Lack oder Kunststoff beschichteten Oberfläche mittels eines gepulsten Laserstrahls unter Verwendung eines TEA-CO₂-Lasers als Laserstrahlquelle, wobei der Laserstrahl über spiegelnde und fokussierende optische Einrichtungen geführt wird, **dadurch gekennzeichnet**, daß im Bearbeitungskopf (1) ein Schwenkspiegel (9) zum Spiegeln des Laserstrahls (6) angeordnet ist, daß zwischen dem Bearbeitungskopf (1) und der zu bearbeitenden Oberfläche (4) ein Tubus (2) mit einer Dichtung (3) am unteren Ende des Tubus (2) vorgesehen ist, daß der Bearbeitungskopf (1) zusammen mit dem Tubus (2) und der Dichtung (3) über die zu bearbeitende Oberfläche (4) zu führen ist und daß eine Absauganlage (22) mit einem Partikelfilter vorgesehen ist.

2. Vorrichtung nach Anspruch 1, dadurch gekennzeichnet, daß der Schwenkspiegel um zwei Achsen schwenkbar ist.

3. Vorrichtung nach Anspruch 1 oder 2, dadurch gekennzeichnet, daß innerhalb des Tubus (2) ein beweglich angeordneter Trichter (16) vorgesehen ist, der innerhalb des Tubus (2) synchron mit dem durch den Schwenkspiegel (9) geführten Laserstrahl (6) bewegbar ist.

4. Vorrichtung nach Anspruch 1 oder 3, dadurch gekennzeichnet, daß zwischen dem oberen Teil des schwenkbaren Trichters (16) und der Innenwandung des Bearbeitungskopfes (1) eine Dichtung vorgesehen ist.

5. Vorrichtung nach einem der vorhergehenden Ansprüche, dadurch gekennzeichnet, daß die gesamte Vorrichtung von einer Fahrzeugeinheit mit einem als Roboter dienenden frei beweglichen Rohrgestänge aufgenommen wird.

6. Vorrichtung nach einem der vorhergehenden Ansprüche, dadurch gekennzeichnet, daß eine Fahrzeugeinheit mit ortsfest am Fahrgestell positioniertem Lasergerät und einem Roboter mit einem frei beweglichen Rohrgestänge vorgesehen ist, bis zu dessen einem Ende ein vom Lasergerät erzeugter Laserstrahl als Freistrahl geleitet wird, der sodann durch das Gestänge geführt wird und an dessen freiem anderen Ende austritt.
